(19) Europäisches Patentamt
European Patent Office
Office européen des brevets

(11) **EP 2 957 333 B1**

## (12) EUROPEAN PATENT SPECIFICATION

(45) Date of publication and mention
of the grant of the patent:
**15.07.2020 Bulletin 2020/29**

(51) Int Cl.:
**B01D 53/22** (2006.01)

(21) Application number: **14180713.1**

(22) Date of filing: **12.08.2014**

(54) **Apparatus and method for recovery of gas**

Vorrichtung und Verfahren zur Gewinnung von Gas

Appareil et procédé de récupération de gaz

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.06.2014 KR 20140075910**

(43) Date of publication of application:
**23.12.2015 Bulletin 2015/52**

(73) Proprietor: **Korea Institute of Science and
Technology
Seongbuk-gu
Seoul 136-791 (KR)**

(72) Inventors:
• **Lee, Sanghyup
136-784 Seoul (KR)**
• **Lee, Soonjae
420-841 Gyeonggi-do (KR)**
• **Choi, Jae Woo
135-506 Seoul (KR)**

(74) Representative: **advotec.
Patent- und Rechtsanwälte
Widenmayerstrasse 4
80538 München (DE)**

(56) References cited:
**DE-A1- 19 837 845     JP-A- 2002 331 219
KR-A- 20120 077 322     US-A1- 2012 260 799
US-B1- 6 389 845       US-B1- 6 454 837**

EP 2 957 333 B1

**Description**

[Technical Field]

The present disclosure relates to an apparatus and method for recovery of gas, and more particularly, to an apparatus and method for recovery of gas, which may increase a target gas concentration in a recovery gas by using a single gas separation membrane module and a plurality of gas storage tanks.

[Background Art]

$SF_6$ is a representative electric insulation material of power equipment, which is used in a washing process when manufacturing a semiconductor wafer or an LCD panel. However, it is known that $SF_6$ gives an influence on global warming about 23900 times of carbon dioxide, and $SF_6$ was pointed out as one of six materials having greatest global warming indexes in the Framework Convention on Climate Change held in Tokyo in 1997. Therefore, it is urgently demanded to dispose of $SF_6$.
In order to dispose of $SF_6$, it is possible to decompose $SF_6$. Since $SF_6$ is very stable, high energy such as plasma is required for decompose $SF_6$, and in the decomposing process, highly toxic or corrosive byproducts such as $S_2F_{10}$, $SF_4$, HF are generated. If such problems in the decomposing process and an increasing price rise of $SF_6$ are taken into consideration, it is very desirable in aspect of reduction of production costs to effectively recover and reuse $SF_6$.
A $SF_6$ recovering technique recovers only $SF_6$ from a mixture gas containing $SF_6$, and is classified into a cryogenics, a pressure swing adsorption (PSA), a membrane separation process or the like, among which the membrane separation process using a gas separation membrane module is being actively studied. The membrane separation process has advantages in relatively simple equipment and comparatively excellent recovery rate. An example of the membrane separation process is disclosed in Korean Patent Registration No. 10-1249261.
In the membrane separation process, a waste gas is injected into a separation membrane module, and the separation membrane module separates the injected waste gas into $SF_6$ (a recovery gas) and other gases (permeation gases). A processing characteristic of the membrane separation process is determined by selectivity and permeability of the separation membrane module. Here, if the separation membrane module has higher permeability, the capacity is great. However, a separation membrane having high permeability has low selectivity, which has low separation performance with respect to the recovery gas.
Since the selectivity and permeability of the separation membrane module have a trade-off relationship as described above, in an existing technique, a plurality of separation membrane modules are provided in multi stages to ensure separation performance and disposal capacity in a suitable level. However, if a plurality of separation membrane modules are repeatedly provided in multi stages, the device configuration is complicated. To solve this, the applicant of this application has proposed a technique for providing two separation membrane modules (namely, a first separation membrane module and a second separation membrane module) and circulating a recovery gas and a permeation gas of the first separation membrane module, respectively, to improve a recovery rate.

RELATED LITERATURES

Patent Literature

Korean Patent Registration No. 10-1249261 (corresponding to US 2012/0260799 A) KR 2012 0077322 A and JP 2002 331219 A disclose further related prior art.

**[Disclosure]**

[Technical Problem]

The present disclosure is directed to providing an apparatus and method for recovery of gas, which may increase a target gas concentration in a recovery gas by using a single gas separation membrane module and a plurality of gas storage tanks.

[Technical Solution]

In one general aspect, the present disclosure provides an apparatus for recovery of gas, which includes: a gas separation membrane module for performing an N number of enriching processes and separating an feed gas into a permeation gas and a recovery gas through each enriching process; and a number 2N of gas storage tanks, wherein in every enriching process up to an $N^{th}$ enriching process, a gas stored in an $n^{th}$ gas storage tank is supplied to the gas separation membrane module and separated into an $n^{th}$ permeation gas and an $n^{th}$ recovery gas, and the $n^{th}$ permeation gas is stored in a $(n-1)^{th}$ gas storage tank and the $n^{th}$ recovery gas is stored in a $(n+1)^{th}$ gas storage tank, wherein n = 1 to N; and wherein the first permeation gas of the first enriching process is not stored in a gas storage tank but emitted, wherein every enriching process having an odd ranking number up to a $(2n-1)^{th}$ enriching process is performed in a forward direction, and if n≥2, every enriching process having an even ranking number up to a $2n^{th}$ enriching process is performed in a rearward direction, and wherein the forward direction represents a gas flow from a first end of the gas separation membrane module facing towards the gas storage tanks having an odd ranking number to a second end thereof facing towards the gas storage tanks having an even ranking number, and the rearward direction represents a direction opposite to the forward direction.

The $n^{th}$ recovery gas and a $(n+2)^{th}$ permeation gas may be stored in the $(n+1)^{th}$ gas storage tank.

A first stage-cut (SC) regulator for controlling a SC value of the gas separation membrane module when the $(2n-1)^{th}$ enriching process is performed and a second SC regulator for controlling a SC value of the gas separation membrane module when the $2n^{th}$ enriching process is performed may be further provided. In addition, a SC value ($\theta_n$) of the $N^{th}$ enriching process may be set according to the following equation:

(Equation)

$$\theta_n = \frac{e_n - 1}{e_n - \frac{1}{(1-x_n)\alpha + x_n}}$$

where $\theta_n$ represents a SC value in the $N^{th}$ enriching process, $e_n$ represents a target enrichment ratio in the $N^{th}$ enriching process, $x_n$ represents a target gas concentration of the feed gas injected into the gas separation membrane module in the $N^{th}$ enriching process, and $\alpha$ represents selectivity of the gas separation membrane module.

A first feed pressure control device and a second feed pressure control device may be further provided, the first feed pressure control device may control a gas pressure supplied to the gas separation membrane module to a constant pressure when the $(2n-1)^{th}$ enriching process is performed, the second feed pressure control device may control a gas pressure supplied to the gas separation membrane module to a constant pressure when the $2n^{th}$ enriching process is performed, and gas pressures controlled by the first feed pressure control device and the second feed pressure control device may be controlled to the same pressure ($P_0$).

A waste gas supply unit for supplying a waste gas containing a target gas to a first gas storage tank may be further provided, the first gas storage tank may store the waste gas supplied from the waste gas supply unit and a second permeation gas, and a first permeation gas of the first enriching process may be emitted.

A target gas concentration ($y_n$) of the $n^{th}$ permeation gas separated in the $N^{th}$ enriching process may be calculated through the following equation:

(Equation )

$$y_n = \frac{x_n}{(1 - x_n)\alpha + x_n}$$

where $y_n$ represents a target gas concentration included in the $n^{th}$ permeation gas of the $N^{th}$ enriching process, $x_n$ represents a target gas concentration in the feed gas injected into the gas separation membrane module in the $N^{th}$ enriching process, and $\alpha$ represents selectivity of the gas separation membrane module.

A membrane area of the gas separation membrane module may be set according to the following equation:

(Equation)

$$A = \frac{f_1 \theta_1}{P_0(P_A(1 - x_0) + P_B x_0)}$$

where A represents a membrane area of the gas separation membrane module, $f_1$ represents an feed gas flow rate of a first enriching process, $\theta_1$ represents a first SC value of the first enriching process, $P_0$ represents a feed pressure of the feed gas injected into the gas separation membrane module, $P_A$ represents permeability of the permeation gas, $P_B$ represents permeability of the target gas, and $x_0$ represents a target gas concentration in a waste gas.

An operation time ($T_1$) of a first enriching process may meet Equation 1 below, and an operation time ($T_n$) of the $N^{th}$ enriching process (n is a natural number equal to or greater than 2) may meet Equation 2 below:

## (Equation 1)

$$T_1 \leq \frac{C_1(P_{1,max} - P_0)}{f_{F,1} - f_0}$$

where $T_1$ represents an operation time of the first enriching process, $C_1$ represents capacity of the first gas storage tank, $P_{1,max}$ represents a maximum gas pressure in the first gas storage tank, $P_0$ represents a feed pressure of the feed gas supplied to the gas separation membrane module, $f_{F,1}$ represents a flow rate of the feed gas in the first enriching process, and $f_0$ represents a flow rate of a waste gas in the first enriching process.

## (Equation 2)

$$T_n \leq \frac{C_n(P_{n,max} - P_0)}{f_{F,n}}$$

where $T_n$ (n is a natural number equal to or greater than 2) represents an operation time of the $N^{th}$ enriching process, $C_n$ represents capacity of the first gas storage tank, $P_{n,max}$ represents a maximum gas pressure of the first gas storage tank, $P_0$ represents a feed pressure of the feed gas supplied to the gas separation membrane module, and $f_{F,n}$ represents a flow rate of the feed gas in the $N^{th}$ enriching process.

In another aspect, the present disclosure also provides a method for recovery of gas, which uses a single gas separation membrane module and a number 2N of gas storage tanks, wherein the gas separation membrane module performs an N number of enriching processes, and an feed gas is separated into a permeation gas and a recovery gas through each enriching process, wherein in every enriching process up to an $N^{th}$ enriching process, a gas stored in an $n^{th}$ gas storage tank is supplied to the gas separation membrane module and separated into an $n^{th}$ permeation gas and an $n^{th}$ recovery gas, and the $n^{th}$ permeation gas is stored in a $(n-1)^{th}$ gas storage tank and the $n^{th}$ recovery gas is stored in a $(n+1)^{th}$ gas storage tank, wherein n = 1 to N; and wherein the first permeation gas of the first enriching process is not stored in a gas storage tank but emitted, wherein every enriching process having an odd ranking number up to a $(2n-1)^{th}$ enriching process is performed in a forward direction, and if n≥2, every enriching process having an even ranking number up to a $2n^{th}$ enriching process is performed in a rearward direction, and wherein the forward direction represents a gas flow from a first end of the gas separation membrane module facing towards the gas storage tanks having an odd ranking number to a second end thereof facing towards the gas storage tanks having an even ranking number, and the rearward direction represents a direction opposite to the forward direction.

A first permeation gas of a first enriching process may be emitted, and a waste gas supplied from a waste gas supply unit and a second permeation gas may be stored in a first gas storage tank. In addition, a pressure of a gas supplied to the gas separation membrane module may be controlled constantly through each enriching process.

[Advantageous Effects]

The apparatus and method for recovery of gas according to the present disclosure gives the following effects.
A target gas concentration in a recovery gas may be maximized through a single gas separation membrane module, and therefore the gas recovery apparatus may have a simplified configuration.

[Description of Drawings]

Fig. 1 is a perspective view of an apparatus for recovery of gas according to an embodiment of the present disclosure.
Figs. 2a to 2c are reference views for illustrating a enriching process performed by an apparatus for recovery of gas according to an embodiment of the present disclosure.

[Best Mode]

The present disclosure is directed to a technique capable of maximizing a concentration rate of a recovery gas when separating an feed gas into a permeation gas and a recovery gas through a gas separation membrane module and recovering the recovery gas.

Generally, in order to increase a concentration rate of a target gas, it is assumed to use a plurality of gas separation membrane modules. However, the present disclosure proposes to maximize a concentration rate of a target gas by using a single gas separation membrane module.

The gas separation membrane module employed in the present disclosure allows a highly permeable gas having a relatively small molecular size (hereinafter, referred to as a 'permeation gas') to pass through pores and also allows a less permeable gas having a relatively great molecular size (hereinafter, referred to as a 'recovery gas') to remain in the gas separation membrane module and thus be recovered. If an feed gas is supplied to the gas separation membrane module, the feed gas is separated into a permeation gas and a recovery gas by means of the gas separation membrane module. In addition, a target gas represents a gas to be finally recovered through the gas separation membrane module, for example $SF_6$ contained in a waste gas. The target gas ($SF_6$) is contained in the waste gas with a certain concentration, and if the waste gas is separated into a permeation gas and a recovery gas by means of the gas separation membrane module, most of the target gas is included in the recovery gas and a small amount of target gas is included in the permeation gas.

In the present disclosure, a plurality of gas storage tanks is applied to increase a concentration rate of the target gas through a single gas separation membrane module, and a plurality of enriching processes using the single gas separation membrane module and the plurality of gas storage tanks are performed in order. By performing the plurality of enriching processes in order, a concentration of the target gas included in the recovery gas may gradually increase.

Hereinafter, an apparatus and method for recovery of gas according to an embodiment of the present disclosure will be described in detail with reference to the accompanying drawings.

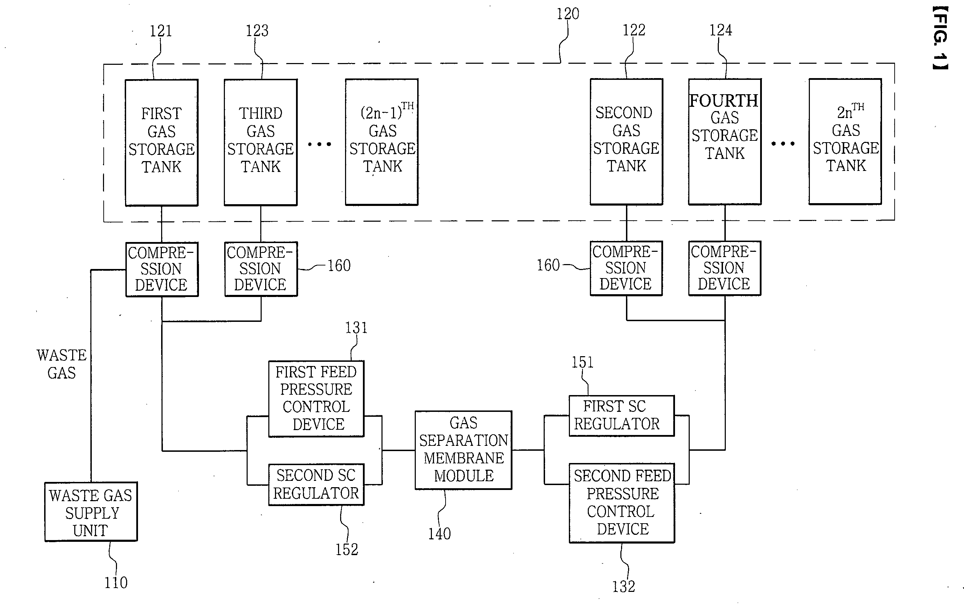

Referring to Fig. 1, an apparatus for recovery of gas according to an embodiment of the present disclosure includes a waste gas supply unit 110, a plurality of gas storage tanks 120, a first feed pressure control device 131, a second feed pressure control device 132, a gas separation membrane module 140, a first SC regulator 151 and a second SC regulator 152.

The waste gas supply unit 110 plays a role of supplying a waste gas containing a target gas to a first gas storage tank 121. The target gas means a gas to be recovered through the gas separation membrane module 140, and the waste gas containing a target gas may be a waste gas containing $SF_6$ or a fluoride gas such as $NF_3$, $CF_4$ or the like, and the target gas may be $SF_6$, $NF_3$, $CF_4$ or the like. The target gas is mixed in the waste gas with a certain concentration. In the following description, the waste gas is selected as $SF_6$.

The plurality of gas storage tanks 120 stores a permeation gas and a recovery gas generated in each enriching process and supplies a gas stored in the gas separation membrane module 140 as an feed gas.

The enriching process means a process for separating a gas into a permeation gas and a recovery gas, which is performed by the gas separation membrane module 140. In the present disclosure, a plurality of enriching processes are applied. Here, different kinds of feed gases are injected into the gas separation membrane module 140 when the plurality of enriching processes are performed, and a permeation gas and a recovery gas separated in each enriching process is selectively stored in the plurality of gas storage tanks.

In addition, the plurality of enriching processes are performed, a enriching process in a forward direction and a enriching process in a rearward direction are performed alternately. Generally, if an feed gas is injected into one end of the gas separation membrane module 140, a recovery gas is recovered through the other end of the gas separation membrane module 140, which is a one-directional gas recovery manner. However, in the present disclosure, a bi-directional gas recovery manner in which a gas may be recovered in both a forward direction and a rearward direction is applied. In a state where the gas separation membrane module 140 has both a first end and a second end, the forward direction means a gas flow from the first end of the gas separation membrane module 140 to the second end, and the rearward direction means a gas flow from the second end of the gas separation membrane module 140 to the first end, which is opposite to the forward direction. In order to treat a gas flow in the forward direction, a first feed pressure control device 131 and a first SC regulator 151 are provided, and in order to treat a gas flow in the rearward direction, a second feed pressure control device 132 and a second SC regulator 152 are provided, as described in detail later.

In the plurality of enriching processes, a $(2n-1)^{th}$ enriching process (n is an integer) is performed in the forward direction, and a $2n^{th}$ enriching process (n is an integer) is performed in the rearward direction. The plurality of enriching processes will be described in detail below.

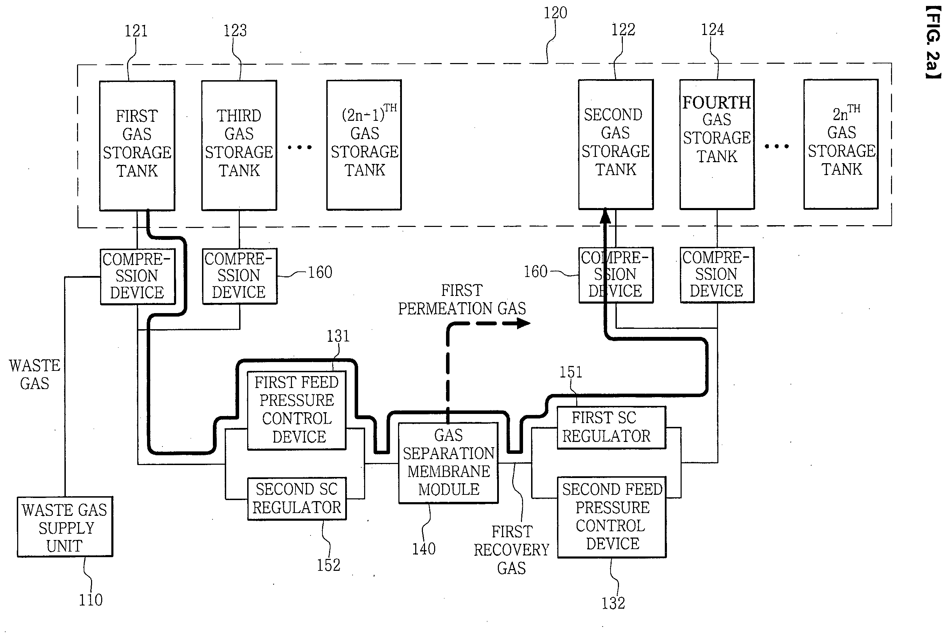

In a first enriching process (see Fig. 2a), a gas stored in the first gas storage tank 121 is supplied to the gas separation membrane module 140 in the forward direction. In addition, a first permeation gas separated by the gas separation membrane module 140 is emitted, and a first recovery gas separated by the gas separation membrane module 140 is stored in the second gas storage tank 122. The first gas storage tank 121 stores the waste gas supplied from the waste gas supply unit 110 and a second permeation gas separated by a second enriching process, described later.

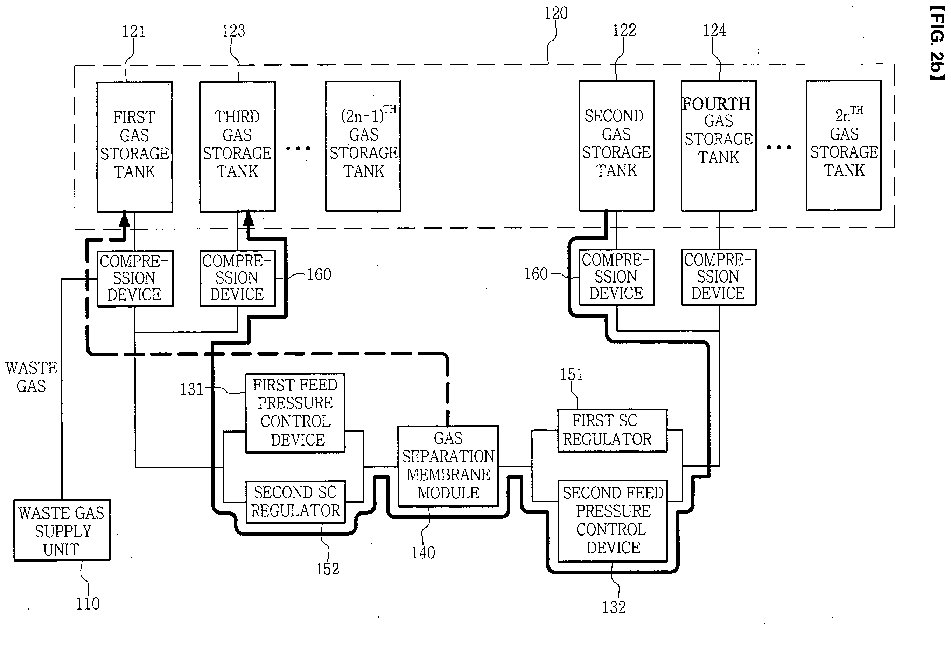

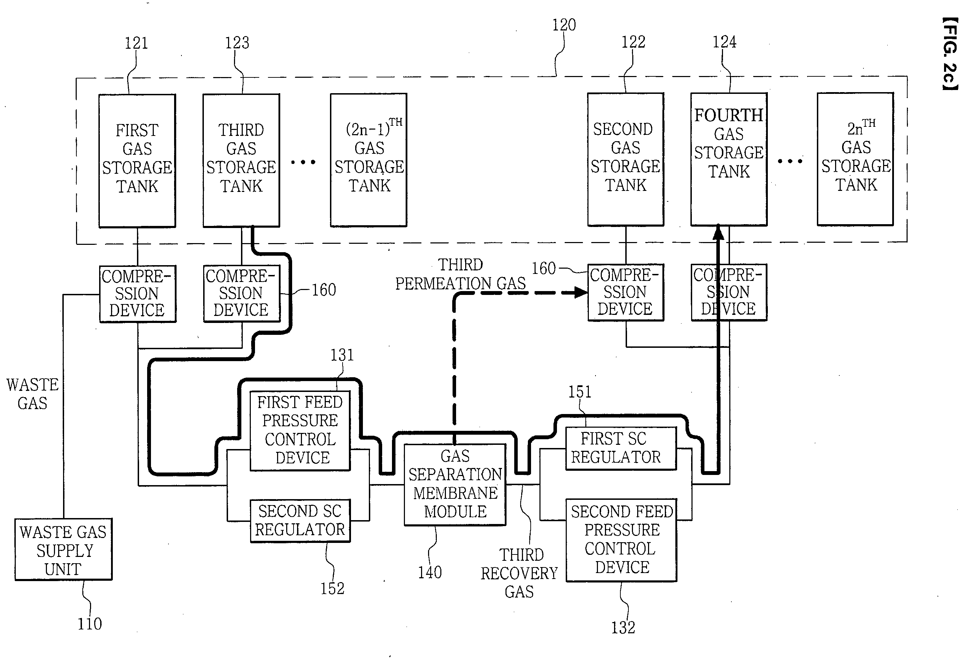

In a second enriching process (see Fig. 2b), a gas stored in the second gas storage tank 122 is supplied to the gas separation membrane module 140 in the rearward direction and separated into a second permeation gas and a second recovery gas. Here, the second permeation gas is stored in the first gas storage tank 121, and the second recovery gas is stored in a third gas storage tank 123. In addition, in a third enriching process (see Fig. 2c), a gas stored in the third gas storage tank 123 is supplied to the gas separation membrane module 140 in the forward direction and separated into a third permeation gas and a third recovery gas. Here, the third permeation gas is stored in the second gas storage tank 122, and the third recovery gas is stored in a fourth gas storage tank 124.

When each enriching process is performed, a relation between a gas storage tank for supplying an feed gas to the gas separation membrane module 140 and a gas storage tank for storing a permeation gas and a recovery gas separated by the gas separation membrane module 140 may be arranged as follows.

In an $N^{th}$ enriching process, a gas stored in an $n^{th}$ gas storage tank is supplied to the gas separation membrane module 140 and separated into an $n^{th}$ permeation gas and an $n^{th}$ recovery gas, wherein the $n^{th}$ permeation gas is stored in a $(n-1)^{th}$ gas storage tank and the $n^{th}$ recovery gas is stored in a $(n+1)^{th}$ gas storage tank. However, the first permeation gas of the first enriching process is not stored in a gas storage tank but emitted.

Meanwhile, in view of the kind of gas stored in the gas storage tank, the second gas storage tank 122 stores a first recovery gas and a third permeation gas, the third gas storage tank 123 stores a second recovery gas and a fourth permeation gas, and the fourth gas storage tank 124 stores a third recovery gas and a fifth permeation gas. If this is arranged, a $(n+1)^{th}$ gas storage tank (n is an integer) stores an $n^{th}$ recovery gas and a $(n+2)^{th}$ permeation gas. However, the first gas storage tank 121 stores a waste gas supplied from the waste gas supply unit 110 and a second permeation gas.

When the plurality of enriching processes are performed in order, since the first permeation gas of the first enriching process is emitted, gases stored in the second gas storage tank 122 to the $n^{th}$ gas storage tank through the plurality of enriching processes may be regarded as gases separated from the first recovery gas. In addition, since a recovery gas separated from a gas stored in a gas storage tank of a former stage is stored in a gas storage tank of a later stage, as the enriching process progresses, a target gas concentration in the recovery gas gradually increases.

The plurality of enriching processes, namely the first enriching process to the $N^{th}$ enriching process, may be performed in order, and the order may also be changed according to an operation condition. For example, the method for recovery of gas may be performed in the order of the first enriching process, the second enriching process, ··, the $N^{th}$ enriching process, or in the order of the first enriching process, the second enriching process, the third enriching process, the first enriching process, and the fourth enriching process.

Meanwhile, a compression device 160 having a compressor shape may be further provided at a front end of each gas storage tank. The compression device 160 plays a role of compressing a gas supplied to and stored in the gas storage tank, and the gas emitted from the gas storage tank and supplied to the gas separation membrane module 140 does not pass through the compression device 160.

Next, the first feed pressure control device 131 and the second feed pressure control device 132 play a role of controlling a gas pressure constantly so that the corresponding gas is supplied to the gas separation membrane module 140 at a constant pressure, when a gas stored in each gas storage tank is supplied to the gas separation membrane module 140. The first feed pressure control device 131 controls a gas pressure when a enriching process in the forward direction (or, the $(2n-1)^{th}$ enriching process) is performed, and the second feed pressure control device 132 controls a gas pressure when a enriching process in the rearward direction (or, the $2n^{th}$ enriching process) is performed. The gas pressures controlled by the first feed pressure control device 131 and the second feed pressure control device 132 may be controlled to the same pressure $P_0$.

The gas separation membrane module 140 plays a role of separating a gas supplied from each gas storage tank into a permeation gas and a recovery gas, and the first enriching process and the second enriching process to the $N^{th}$ enriching process are performed in order by the gas separation membrane module 140 as described above.

The gas separation membrane module 140 is a separation membrane assembly in a hollow fiber shape having pores on its surface. Here, a gas having a relatively small molecular size such as $O_2$, $N_2$, $CO_2$ or the like, other than $SF_6$, rapidly passes through the pores of the separation membrane and is emitted, and $SF_6$ having a relatively great molecular size does not pass through the pores but is first recovered at one end of the separation membrane. The gas emitted through the pores of the separation membrane is a permeation gas, and the gas recovered at one end of the separation membrane is a recovery gas. At this time, not only a gas having a relatively small molecular size ($O_2$, $N_2$, $CO_2$ or the like) but also a $SF_6$ gas having a relatively great molecular size is emitted through the pores of the separation membrane. However, since the $SF_6$ gas has permeability lower than the permeability of $O_2$, $N_2$, $CO_2$ or the like, the $SF_6$ gas may be recovered as a recovery gas. Therefore, gases such as $O_2$, $N_2$, $CO_2$ or the like may be substantially regarded as highly permeable gases, and the $SF_6$ gas may be regarded as a less permeable gas.

The first SC regulator 151 and the second SC regulator 152 play a role of controlling a stage-cut (SC) value of the gas separation membrane module 140 in each enriching process. In detail, the first SC regulator 151 controls a SC value of the gas separation membrane module 140 when a enriching process in the forward direction, namely a $(2n-1)^{th}$ enriching process, is performed, and the second SC regulator 152 controls a SC value of the gas separation membrane module 140 when a enriching process in the rearward direction, namely a $2n^{th}$ enriching process, is performed.

The SC value controlled by the first SC regulator 151 and the second SC regulator 152 means a ratio of a permeation gas flow rate in comparison to an feed gas flow rate, as shown in Equation 2 below. For example, if the SC value is 0.95, a permeation gas flow rate in comparison to the feed gas flow rate is 95%, and a recovery gas flow rate is 5%, which means 5% of the entire feed gas is recovered (see Equations 1 and 2).

(Equation 1)

feed gas flow rate ($F_f$) = permeation gas flow rate ($F_p$) + recovery gas flow rate ($F_r$)

(Equation 2)

SC = permeation gas flow rate ($F_p$) / feed gas flow rate ($F_f$)

Meanwhile, the SC value applied to each enriching process is set so that the SC value decreases as the enriching process progresses. As described above, in a state where the first permeation gas separated in the first enriching process is emitted, a following enriching process is performed based on the first recovery gas, and a recovery gas separated from a gas stored in a gas storage tank of a former stage is stored in a gas storage tank of a later stage. Therefore, as the enriching process progresses, a flow rate of the recovery gas becomes relatively greater, and a flow rate of the permeation gas becomes relatively smaller.

The SC value applied to each enriching process is determined by a target enrichment ratio (e), selectivity ($\alpha$) of the gas separation membrane module 140, and a target gas concentration ($x_f$) of the feed gas. The target enrichment ratio (e) means a ratio of a target gas concentration ($x_r$) in the recovery gas in comparison to a target gas concentration ($x_f$) in the feed gas (see Equation 3). If the target gas concentration ($x_r$) in the recovery gas is set in a state where the target gas concentration ($x_f$) in the feed gas is given, the target enrichment ratio (e) may be calculated. The selectivity ($\alpha$) of the gas separation membrane module 140 means a ratio of permeability ($P_A$) of the permeation gas in comparison to permeability ($P_B$) of the target gas (see Equation 4).

An $n^{th}$ SC value ($\theta_n$) applied to the $N^{th}$ enriching process is defined according to Equation 5 below, and the SC value applied to each enriching process decreases as the enriching process progresses.

(Equation 3)

target enrichment ratio (e) = $x_r$ / $x_f$

where e represents a target enrichment ratio, $x_f$ represents a target gas concentration in an feed gas, and $x_r$ represents a target gas concentration in a recovery gas.

(Equation 4)

$\alpha = P_A / P_B$

where $\alpha$ represents selectivity of the gas separation membrane module 140, $P_B$ represents permeability of the target gas, and $P_A$ represents permeability of the permeation gas.

### (Equation 5)

$$\theta_n \;=\; \frac{e_n - 1}{e_n - \frac{1}{(1-x_n)\alpha + x_n}}$$

where $\theta_n$ represents a SC value in the $N^{th}$ enriching process, $e_n$ represents a target enrichment ratio of the $N^h$ enriching process, $x_n$ represents a target gas concentration of the feed gas injected into the gas separation membrane module 140 in the $N^{th}$ enriching process, and $\alpha$ represents selectivity of the gas separation membrane module 140.

Meanwhile, even though it has been explained that the first permeation gas is not stored in the gas storage tank but emitted, this is on the premise that the target gas concentration in the first permeation gas, namely a $SF_6$ concentration in the first permeation gas, is sufficiently low to meet the emission standard. If the target gas concentration in the first permeation gas does not conform to the emission standard, the first permeation gas may be stored in the first gas storage tank 121 to pass through the first enriching process again. In addition, the second permeation gas, the third permeation gas or the like are stored in the gas storage tank and pass through a enriching process. Here, the second permeation gas, the third permeation gas or the like may also not be stored in a gas storage tank but emitted if a target gas concentration contained in the corresponding permeation gas conforms to the emission standard.

In order to determine whether the target gas concentration in the permeation gas conforms to the emission standard, a target gas concentration in the corresponding permeation gas should be accurately calculated. Here, the target gas concentration of a permeation gas generated in each enriching process may be calculated through Equation 6 below.

### (Equation 6)

$$y_n \;=\; \frac{x_n}{(1 - x_n)\alpha + x_n}$$

where $y_n$ represents a target gas concentration included in the $n^{th}$ permeation gas of the $N^{th}$ enriching process, $x_n$ represents a target gas concentration in the feed gas injected into the gas separation membrane module 140 in the $N^{th}$ enriching process, and $\alpha$ represents selectivity of the gas separation membrane module 140.

In addition, an optimal membrane area of a gas separation membrane for performing a plurality of enriching processes according to the present disclosure may be designed. Here, the optimal membrane area of a gas separation membrane is designed according to Equation 7.

### (Equation 7)

$$A \;=\; \frac{f_1 \theta_1}{P_0(P_A(1 - x_0) + P_B x_0)}$$

where A represents a membrane area of the gas separation membrane module 140, $f_1$ represents an feed gas flow rate of a first enriching process, $\theta_1$ represents a first SC value of the first enriching process, $P_0$ represents a feed pressure of the feed gas injected into the gas separation membrane module 140, $P_A$ represents permeability of the permeation gas, $P_B$ represents permeability of the target gas, and $x_0$ represents a target gas concentration in a waste gas.

Meanwhile, when the plurality of enriching processes are performed, an optimal operation time of each enriching process may be set.

First, an optimal operation time of the first enriching process may be arranged as follows.

During an operation time ($T_1$) of the first enriching process, a volume ($V_{in}$) of a waste gas flowing into the first gas storage tank and a volume ($V_{out}$) of an feed gas supplied from the first gas storage tank to the gas separation membrane module are arranged as in Equations 8 and 9 below. Based on Equations 8 and 9, a volume decrement ($V_{out}$-$V_{in}$) in the first gas storage tank at the completion point of the first enriching process is arranged as in Equation 10.

Meanwhile, when the first enriching process is performed, the pressure in the first gas storage tank is highest at a start point of the first enriching process ($P_{1,max}$), and at this time, the volume in the first gas storage tank is arranged as $C_1 \cdot P_{1,max}$ ($C_1$ represents capacity of the first gas storage tank). When the first enriching process is performed, the gas volume in the first gas storage tank slowly decreases, and accordingly the gas pressure in the first gas storage tank also slowly decreases. At this time, if the gas pressure in the first gas storage tank is smaller than a feed pressure ($P_0$) to the gas separation membrane module, gas may not be supplied to the gas separation membrane module. Therefore, in the first enriching process, the minimum volume in the first gas storage tank should be greater than $C_1 \cdot P_0$. For this reason, in the first enriching process, the maximum decrement ($V_{o-i,max}$) in the first gas storage tank may be arranged as in Equation 11.

In this arrangement, a volume decrement ($V_{out}$-$V_{in}$) in the first gas storage tank at a completion point of the first enriching process should be equal to or smaller than a maximum decrement ($V_{o-i,max}$) of the gas in the first gas storage tank in the first enriching process (see Equation 12), and an optimal operation time of the first enriching process satisfying this condition may be set as in Equation 13.

(Equation 8)

$$V_{in} = T_1 f_0$$

where $V_{in}$ represents a volume of a waste gas flowing into the first gas storage tank during an operation time of the first enriching process, $T_1$ represents an operation time of the first enriching process, and $f_0$ represents a flow rate of the waste gas in the first enriching process.

(Equation 9)

$$V_{out} = T_1 f_{F,1}$$

where $V_{out}$ represents a volume of a waste gas supplied from the first gas storage tank to the gas separation membrane module during an operation time of the first enriching process, $T_1$ represents an operation time of the first enriching process, and $f_{F,1}$ represents a flow rate of the feed gas in the first enriching process.

(Equation 10)

$$V_{out} - V_{in} = T_1 f_{F,1} - T_1 f_0$$

(Equation 11)

$$V_{o-i,max} = C_1 P_{1,max} - C_1 P_0$$

where $V_{o-i,max}$ represents a maximum decrement of gas in the first gas storage tank in the first enriching process, $C_1$ represents capacity of the first gas storage tank, $P_{1,max}$ represents a maximum gas pressure in the first gas storage tank, and $P_0$ represents a feed pressure of the feed gas supplied to the gas separation membrane module.

(Equation 12)

$$T_1 f_{F,1} - T_1 f_0 \leq C_1 P_{1,max} - C_1 P_0$$

$$T_1(f_{F,1} - f_0) \leq C_1(P_{1,max} - P_0)$$

(Equation 13)

$$T_1 \leq \frac{C_1(P_{1,max} - P_0)}{f_{F,1} - f_0}$$

where $T_1$ represents an operation time of the first enriching process, $C_1$ represents capacity of the first gas storage tank, $P_{1,max}$ represents a maximum gas pressure in the first gas storage tank, $P_0$ represents a feed pressure of the feed gas supplied to the gas separation membrane module, $f_{F,1}$ represents a flow rate of the feed gas in the first enriching process, and $f_0$ represents a flow rate of a waste gas in the first enriching process.

Heretofore, the optimal operation time of the first enriching process has been described. However, the optimal operation time may also be set with respect to the $N^{th}$ enriching process, without being limited to the first enriching process. An optimal operation time of the $N^{th}$ enriching process (n is a natural number equal to or greater than 2) is set as in Equation 14 below. In the $N^{th}$ enriching process (n is a natural number equal to or greater than 2), the waste gas is not supplied to the $n^{th}$ gas storage tank (n is a natural number equal to or greater than 2), and thus the flow rate ($f_0$) of the waste gas is excluded from the variables.

$$\text{(Equation 14)}$$

$$T_n \leq \frac{C_n(P_{n,max} - P_0)}{f_{F,n}}$$

where $T_n$ (n is a natural number equal to or greater than 2) represents an operation time of the $N^{th}$ enriching process, $C_n$ represents capacity of the first gas storage tank, $P_{n,max}$ represents a maximum gas pressure of the first gas storage tank, $P_0$ represents a feed pressure of the feed gas supplied to the gas separation membrane module, and $f_{F,n}$ represents a flow rate of the feed gas in the $N^{th}$ enriching process.

The flow rate ($f_{F,1}$) of the feed gas in the first enriching process and the flow rate ($f_{F,n}$) of the feed gas in the $N^{th}$ enriching process, applied to Equations 13 and 14, may be arranged as in Equations 15 and 16, respectively.

$$\text{(Equation 15)}$$

$$f_{F,1} = \frac{1}{\theta_1} AP_0(P_A(1 - x_0) + P_B x_0)$$

where $f_{F,1}$ represents a flow rate of the feed gas in the first enriching process, $\theta_1$ represents a first SC value of the first enriching process, A represents a membrane area of the gas separation membrane module, $P_0$ represents a feed pressure of the feed gas injected into the gas separation membrane module, $P_A$ represents permeability of the permeation gas, $P_B$ represents permeability of the target gas, and $x_0$ represents a target gas concentration in the waste gas.

$$\text{(Equation 16)}$$

$$f_{F,n} = \frac{1}{\theta_n} AP_0(P_A(1 - x_n) + P_B x_n)$$

where $f_{F,n}$ (n is an integer) represents a flow rate of the feed gas in the $N^{th}$ enriching process, $\theta_n$ represents a first SC value of the $N^{th}$ enriching process, A represents a membrane area of the gas separation membrane module, $P_0$ represents a feed pressure of the feed gas injected into the gas separation membrane module, $P_A$ represents permeability of the permeation gas, $P_B$ represents permeability of the target gas, and $x_n$ represents a target gas concentration in the feed gas injected into the gas separation membrane module in the $N^{th}$ enriching process.

In addition, the flow rate ($f_{F,1}$) of the feed gas in the first enriching process may be arranged as in Equation 17 below in view of the waste gas flow rate ($f_0$) and the operation time ($T_i$) of the enriching process. Equation 17 below is derived on the assumption that an entire volume ($f_0 \cdot \sum T_i$) of gas treated through the plurality of enriching processes of the gas recovery apparatus according to the present disclosure corresponds to a volume ($f_{F,1} \cdot T_1$) of the feed gas injected into the gas separation membrane module during an operation time of the first enriching process.

(Equation 17)

$$f_{F,1} \geq f_0 \frac{\sum T_i}{T_1}$$

where $f_{F,1}$ represents a flow rate of the feed gas in the first enriching process, $f_0$ represents a waste gas flow rate, $\sum T_i$ represents a sum of operation times of the plurality of enriching processes, and $T_1$ represents an operation time of the first enriching process.

[Detailed Description of Main Elements]

110: waste gas supply unit    120: plurality of gas storage tanks
121: first gas storage tank    122: second gas storage tank
123: third gas storage tank    124: fourth gas storage tank
131: first feed pressure control device
132: second feed pressure control device
140: gas separation membrane module
151: first SC regulator    152: second SC regulator
160: compression device

**Claims**

1.  An apparatus for recovery of gas, comprising:

    a gas separation membrane module (140) for performing an N number of enriching processes and separating an feed gas into a permeation gas and a recovery gas through each enriching process; and
    a number 2N of gas storage tanks,
    wherein in every enriching process up to an $N^{th}$ enriching process, a gas stored in an $n^{th}$ gas storage tank is supplied to the gas separation membrane module (140) and separated into an $n^{th}$ permeation gas and an $n^{th}$ recovery gas, and the $n^{th}$ permeation gas is stored in a $(n-1)^{th}$ gas storage tank and the $n^{th}$ recovery gas is stored in a $(n+1)^{th}$ gas storage tank, wherein n = 1 to N; and
    wherein the first permeation gas of the first enriching process is not stored in a gas storage tank but emitted, wherein every enriching process having an odd ranking number up to a $(2n-1)^{th}$ enriching process is performed in a forward direction, and if n≥2, every enriching process having an even ranking number up to a $2n^{th}$ enriching process is performed in a rearward direction, and
    wherein the forward direction represents a gas flow from a first end of the gas separation membrane module (140) facing towards the gas storage tanks having an odd ranking number to a second end thereof facing towards the gas storage tanks having an even ranking number, and the rearward direction represents a direction opposite to the forward direction.

2.  The apparatus for recovery of gas according to claim 1, further comprising:

    a first stage-cut (SC) regulator (151) for controlling a SC value of the gas separation membrane module (140) when the $(2n-1)^{th}$ enriching process is performed; and
    a second SC regulator (152) for controlling a SC value of the gas separation membrane module (140) when the $2n^{th}$ enriching process is performed.

3.  The apparatus for recovery of gas according to claim 1 or 2, wherein a SC value ($\theta_n$) of the $N^{th}$ enriching process is set according to the following equation:

    (Equation)
    $$\theta_n = \frac{e_n - 1}{e_n - \frac{1}{(1-x_n)a+x_n}}$$

where $\theta_n$ represents a SC value in the $N^{th}$ enriching process, $e_n$ represents a target enrichment ratio in the $N^{th}$ enriching process, $x_n$ represents a target gas concentration of the feed gas injected into the gas separation membrane module (140) in the $N^{th}$ enriching process, and $\alpha$ represents selectivity of the gas separation membrane module (140).

4. The apparatus for recovery of gas according to one of claims 1 to 3, further comprising a first feed pressure control device (131) and a second feed pressure control device (132),
wherein the first feed pressure control device (131) controls a gas pressure supplied to the gas separation membrane module (140) to a constant pressure when the $(2n-1)^{th}$ enriching process is performed,
wherein the second feed pressure control device (132) controls a gas pressure supplied to the gas separation membrane module (140) to a constant pressure when the $2n^{th}$ enriching process is performed, and
wherein gas pressures controlled by the first feed pressure control device (131) and the second feed pressure control device (132) are controlled to the same pressure ($P_0$).

5. The apparatus for recovery of gas according to one of claims 1 to 4, further comprising a waste gas supply unit (110) for supplying a waste gas containing a target gas to a first gas storage tank (121),
wherein the first gas storage tank (121) stores the waste gas supplied from the waste gas supply unit (110) and a second permeation gas, and a first permeation gas of the first enriching process is emitted.

6. The apparatus for recovery of gas according to one of claims 1 to 5,
wherein a target gas concentration ($y_n$) of the $n^{th}$ permeation gas separated in the $N^{th}$ enriching process is calculated through the following equation:

$$y_n = \frac{x_n}{(1-x_n)\alpha + x_n}$$
(Equation )

where $y_n$ represents a target gas concentration included in the $n^{th}$ permeation gas of the $N^{th}$ enriching process, $x_n$ represents a target gas concentration in the feed gas injected into the gas separation membrane module (140) in the $N^{th}$ enriching process, and $\alpha$ represents selectivity of the gas separation membrane module (140).

7. The apparatus for recovery of gas according to one of claims 1 to 6,
wherein a membrane area of the gas separation membrane module (140) is set according to the following equation:

$$A = \frac{f_1\theta_1}{P_0(P_A(1-x_0) + P_B x_0)}$$
(Equation)

where A represents a membrane area of the gas separation membrane module (140), $f_1$ represents an feed gas flow rate of a first enriching process, $\theta_1$ represents a first SC value of the first enriching process, $P_0$ represents a feed pressure of the feed gas injected into the gas separation membrane module (140), $P_A$ represents permeability of the permeation gas, $P_B$ represents permeability of the target gas, and $x_0$ represents a target gas concentration in a waste gas.

8. The apparatus for recovery of gas according to one of claims 1 to 7,
wherein an operation time ($T_1$) of a first enriching process meets Equation 1 below, and an operation time ($T_n$) of the $N^{th}$ enriching process (n is a natural number equal to or greater than 2) meets Equation 2 below:

$$T_1 \le \frac{C_1(P_{1,max} - P_0)}{f_{F,1} - f_0}$$
(Equation 1)

where $T_1$ represents an operation time of the first enriching process, $C_1$ represents capacity of the first gas storage tank (121), $P_{1,max}$ represents a maximum gas pressure in the first gas storage tank (121), $P_0$ represents a feed pressure of the feed gas supplied to the gas separation membrane module (140), $f_{F,1}$ represents a flow rate of the feed gas in the first enriching process, and $f_0$ represents a flow rate of a waste gas in the first enriching process,

$$T_n \leq \frac{C_n(P_{n,max} - P_0)}{f_{F,n}}$$

(Equation 2)

where $T_n$ (n is a natural number equal to or greater than 2) represents an operation time of the $N^{th}$ enriching process, $C_n$ represents capacity of the first gas storage tank (121), $P_{n,max}$ represents a maximum gas pressure of the first gas storage tank (121), $P_0$ represents a feed pressure of the feed gas supplied to the gas separation membrane module (140), and $f_{F,n}$ represents a flow rate of the feed gas in the $N^{th}$ enriching process.

9. A method for recovery of gas,
   wherein the method for recovery of gas uses a single gas separation membrane module (140) and a number 2N of gas storage tanks,
   wherein the gas separation membrane module (140) performs an N number of enriching processes, and an feed gas is separated into a permeation gas and a recovery gas through each enriching process,
   wherein in every enriching process up to an $N^{th}$ enriching process, a gas stored in an $n^{th}$ gas storage tank is supplied to the gas separation membrane module (140) and separated into an $n^{th}$ permeation gas and an $n^{th}$ recovery gas, and the $n^{th}$ permeation gas is stored in a $(n-1)^{th}$ gas storage tank and the $n^{th}$ recovery gas is stored in a $(n+1)^{th}$ gas storage tank, wherein n = 1 to N; and
   wherein the first permeation gas of the first enriching process is not stored in a gas storage tank but emitted,
   wherein every enriching process having an odd ranking number up to a $(2n-1)^{th}$ enriching process is performed in a forward direction, and if n≥2, every enriching process having an even ranking number up to a $2n^{th}$ enriching process is performed in a rearward direction, and
   wherein the forward direction represents a gas flow from a first end of the gas separation membrane module (140) facing towards the gas storage tanks having an odd ranking number to a second end thereof facing towards the gas storage tanks having an even ranking number, and the rearward direction represents a direction opposite to the forward direction.

10. The method for recovery of gas according to claim 9,
    wherein a first permeation gas of a first enriching process is emitted, and wherein a waste gas supplied from a waste gas supply unit (110) and a second permeation gas are stored in a first gas storage tank.

11. The method for recovery of gas according to claim 9 or 10,
    wherein a SC regulator for controlling a SC value of the gas separation membrane module (140) when the $N^{th}$ enriching process is performed is provided, and SC value ($\theta_n$) of the $N^{th}$ enriching process is set according to the following equation:

$$\theta_n = \frac{e_n - 1}{e_n - \frac{1}{(1-x_n)\alpha + x_n}}$$

(Equation)

where $\theta_n$ represents a SC value in the $N^{th}$ enriching process, $e_n$ represents a target enrichment ratio in the $N^{th}$ enriching process, $x_n$ represents a target gas concentration of the feed gas injected into the gas separation membrane module (140) in the $N^{th}$ enriching process, and $\alpha$ represents selectivity of the gas separation membrane module (140).

12. The method for recovery of gas according to one of claims 9 to 11,
    wherein a pressure of a gas supplied to the gas separation membrane module (140) is controlled constantly through each enriching process.

13. The method for recovery of gas according to one of claims 9 to 12,
    wherein a target gas concentration ($y_n$) of the $n^{th}$ permeation gas separated in the $N^{th}$ enriching process is calculated through the following equation:

$$y_n = \frac{x_n}{(1 - x_n)\alpha + x_n}$$

(Equation )

where $y_n$ represents a target gas concentration included in the $n^{th}$ permeation gas of the $N^{th}$ enriching process, represents a target gas concentration in the feed gas injected into the gas separation membrane module (140) in the $N^{th}$ enriching process, and $\alpha$ represents selectivity of the gas separation membrane module (140).

14. The method for recovery of gas according to one of claims 9 to 13,
    wherein a membrane area of the gas separation membrane module (140) is set according to the following equation:

$$(\text{Equation}) \quad A = \frac{f_1\theta_1}{P_0(P_A(1 - x_0) + P_B x_0)}$$

where A represents a membrane area of the gas separation membrane module (140), $f_1$ represents an feed gas flow rate of a first enriching process, $\theta_1$ represents a first SC value of the first enriching process, $P_0$ represents a feed pressure of the feed gas injected into the gas separation membrane module (140), $P_A$ represents permeability of the permeation gas, $P_B$ represents permeability of the target gas, and $x_0$ represents a target gas concentration in a waste gas.

15. The method for recovery of gas according to one of claims 9 to 14,
    wherein an operation time ($T_1$) of a first enriching process meets Equation 1 below, and an operation time ($T_n$) of the $N^{th}$ enriching process (n is a natural number equal to or greater than 2) meets Equation 2 below:

$$(\text{Equation 1}) \quad T_1 \leq \frac{C_1(P_{1,max} - P_0)}{f_{F,1} - f_0}$$

where $T_1$ represents an operation time of the first enriching process, $C_1$ represents capacity of the first gas storage tank, $P_{1,max}$ represents a maximum gas pressure in the first gas storage tank, $P_0$ represents a feed pressure of the feed gas supplied to the gas separation membrane module (140), $f_{F,1}$ represents a flow rate of the feed gas in the first enriching process, and $f_0$ represents a flow rate of a waste gas in the first enriching process,

$$(\text{Equation 2}) \quad T_n \leq \frac{C_n(P_{n,max} - P_0)}{f_{F,n}}$$

where $T_n$ (n is a natural number equal to or greater than 2) represents an operation time of the $N^{th}$ enriching process, $C_n$ represents capacity of the first gas storage tank, $P_{n,max}$ represents a maximum gas pressure of the first gas storage tank, $P_0$ represents a feed pressure of the feed gas supplied to the gas separation membrane module (140), and $f_{F,n}$ represents a flow rate of the feed gas in the $N^{th}$ enriching process.

**Patentansprüche**

1. Vorrichtung zur Rückgewinnung von Gas, umfassend:

   ein Gastrennmembranmodul (140) zum Durchführen von N Anreicherungsprozessen und zum Trennen eines Feedgases in jedem Anreicherungsprozess in ein permeierendes Gas und ein Rückgewinnungsgas; und
   2N Gasspeichertanks wobei ein in einem n-ten Gasspeichertank gespeichertes Gas in jedem Anreicherungsprozess bis zu einem N-ten Anreicherungsprozess dem Gastrennmembranmodul (140) zugeführt wird und in ein n-tes permeierendes Gas und ein
   n-tes Rückgewinnungsgas getrennt wird, und wobei das n-te permeierende Gas in einem
   (n - 1)-ten Gasspeichertank gespeichert wird und das n-te Rückgewinnungsgas in einem (n + 1)-ten Gasspeichertank gespeichert wird, wobei n = 1 bis N; und wobei das erste permeierende Gas des ersten Anreicherungsprozesses nicht in einem Gasspeichertank gespeichert wird, sondern ausgestoßen wird,
   wobei jeder Anreicherungsprozess mit einer ungeraden Ordnungszahl bis zu einem (2n - 1)-ten Anreicherungsprozess in Vorwärtsrichtung durchgeführt wird, und wobei jeder Anreicherungsprozess mit einer geraden Ordnungszahl bis zu einem 2n-ten Anreicherungsprozess in Rückwärtsrichtung durchgeführt wird, wenn n ≥ 2, und wobei die Vorwärtsrichtung für einen Gasstrom von einem den Gasspeichertanks mit einer ungeraden Ordnungszahl zugewandten ersten Ende des Gastrennmembranmoduls (140) zu einem den Gasspeichertanks mit einer geraden Ordnungszahl zugewandten zweiten Ende des Gastrennmembranmoduls (140) steht, und wobei die Rückwärtsrichtung für eine der Vorwärtsrichtung entgegengesetzte Richtung steht.

2. Vorrichtung zur Rückgewinnung von Gas nach Anspruch 1, des Weiteren umfassend:

einen ersten Stufenschnitt-Regler (151) (engl. *stage-cut (SC) regulator*) zum Regeln eines SC-Wertes des Gastrennmembranmoduls (140) beim Durchführen des (2n - 1)-ten Anreicherungsprozesses; und einen zweiten SC-Regler (152) zum Regeln eines SC-Wertes des Gastrennmembranmoduls (140) beim Durchführen des 2n-ten Anreicherungsprozesses.

3. Vorrichtung zur Rückgewinnung von Gas nach Anspruch 1 oder 2, wobei ein SC-Wert ($\theta_n$) des N-ten Anreicherungsprozesses in Abhängigkeit von der folgenden Gleichung festgelegt wird:

$$\text{(Gleichung)} \quad \theta_n \;=\; \frac{e_n - 1}{e_n - \frac{1}{(1-r_n)\alpha + r_n}} \;,$$

wobei $\theta_n$ für einen SC-Wert in dem N-ten Anreicherungsprozess steht, en für ein Zielanreicherungsverhältnis in dem N-ten Anreicherungsprozess steht, für eine Zielgaskonzentration des in dem N-ten Anreicherungsprozess in das Gastrennmembranmodul (140) eingespeisten Feedgases steht und $\alpha$ für eine Selektivität des Gastrennmembranmoduls (140) steht.

4. Vorrichtung zur Rückgewinnung von Gas nach einem der Ansprüche 1 bis 3, des Weiteren eine erste Feeddruck-Reguliervorrichtung (131) und eine zweite Feeddruck-Reguliervorrichtung (132) umfassend, wobei die erste Feeddruck-Reguliervorrichtung (131) einen dem Gastrennmembranmodul (140) zugeführten Gasdruck so reguliert, dass der Druck beim Durchführen des (2n - 1)-ten Anreicherungsprozesses konstant ist, wobei die zweite Feeddruck-Reguliervorrichtung (132) einen dem Gastrennmembranmodul (140) zugeführten Gasdruck so reguliert, dass der Druck beim Durchführen des (2n - 1)-ten Anreicherungsprozesses konstant ist, wobei durch die erste Feeddruck-Reguliervorrichtung (131) und die zweite Feeddruck-Reguliervorrichtung (132) regulierte Gasdrücke auf den gleichen Druck (Po) gebracht werden.

5. Vorrichtung zur Rückgewinnung von Gas nach einem der Ansprüche 1 bis 4, des Weiteren umfassend eine Abgasversorgungseinheit (110), um ein ein Zielgas enthaltendes Abgas einem ersten Gasspeichertank (121) zuzuführen, wobei der erste Gasspeichertank (121) das von der Abgasversorgungseinheit (110) zugeführte Abgas und ein zweites permeierendes Gas speichert, und wobei ein erstes permeierendes Gas des ersten Anreicherungsprozesses ausgestoßen wird.

6. Vorrichtung zur Rückgewinnung von Gas nach einem der Ansprüche 1 bis 5, wobei eine Zielgaskonzentration ($y_n$) des in dem N-ten Anreicherungsprozess getrennten n-ten permeierenden Gases mit der folgenden Gleichung berechnet wird:

$$\text{(Gleichung)} \quad y_n \;=\; \frac{x_n}{(1 - x_n)\alpha + x_n} \;,$$

wobei $y_n$ für eine in dem n-ten permeierenden Gas des N-ten Anreicherungsprozesses enthaltene Zielgaskonzentration steht, $x_n$ für eine Zielgaskonzentration in dem in dem N-ten Anreicherungsprozess in das Gastrennmembranmodul (140) eingespeisten Feedgas steht und $\alpha$ für eine Selektivität des Gastrennmembranmoduls (140) steht.

7. Vorrichtung zur Rückgewinnung von Gas nach einem der Ansprüche 1 bis 6, wobei eine Membranfläche des Gastrennmembranmoduls (140) in Abhängigkeit von der folgenden Gleichung festgelegt wird:

$$A = \frac{f_1\theta_1}{P_0(P_A(1-x_0) + P_B x_0)}$$

(Gleichung) ,

wobei A für eine Membranfläche des Gastrennmembranmoduls (140) steht, $f_1$ für eine Feedgas-Durchflussmenge eines ersten Anreicherungsprozesses steht, $\theta_1$ für einen ersten SC-Wert des ersten Anreicherungsprozesses steht, $P_0$ für einen Feeddruck des in das Gastrennmembranmodul (140) eingespeisten Feedgases steht, $P_A$ für eine Permeabilität des permeierenden Gases steht, $P_B$ für eine Permeabilität des Zielgases steht und $x_0$ für eine Zielgaskonzentration in einem Abgas steht.

8. Vorrichtung zur Rückgewinnung von Gas nach einem der Ansprüche 1 bis 7, wobei eine Arbeitszeit ($T_1$) eines ersten Anreicherungsprozesses die nachstehende Gleichung 1 erfüllt und eine Arbeitszeit ($T_n$) des N-ten Anreicherungsprozesses (n ist eine natürliche Zahl, die gleich oder größer als 2 ist) die nachstehende Gleichung 2 erfüllt:

$$T_1 \leq \frac{C_1(P_{1,max} - P_0)}{f_{F,1} - f_0}$$

(Gleichung 1) ,

wobei $T_1$ für eine Arbeitszeit des ersten Anreicherungsprozesses steht, $C_1$ für eine Kapazität des ersten Gasspeichertanks (121) steht, $P_{1,max}$ für einen maximalen Gasdruck in dem ersten Gasspeichertank (121) steht, $P_0$ für einen Feeddruck des dem Gastrennmembranmodul (140) zugeführten Feedgases steht, $f_{F,1}$ für eine Durchflussmenge des Feedgases in dem ersten Anreicherungsprozess steht und $f_0$ für eine Durchflussmenge eines Abgases in dem ersten Anreicherungsprozess steht,

$$T_n \leq \frac{C_n(P_{n,max} - P_0)}{f_{F,n}}$$

(Gleichung 2) ,

wobei $T_n$ (n ist eine natürliche Zahl, die gleich oder größer als 2 ist) für eine Arbeitszeit des N-ten Anreicherungsprozesses steht, $C_n$ für eine Kapazität des ersten Gasspeichertanks (121) steht, $P_{n,max}$ für einen maximalen Gasdruck des ersten Gasspeichertank (121) steht, $P_0$ für einen Feeddruck des dem Gastrennmembranmodul (140) zugeführten Feedgases steht und $f_{F,n}$ für eine Durchflussmenge des Feedgases in dem N-ten Anreicherungsprozess steht.

9. Verfahren zur Rückgewinnung von Gas,
wobei in dem Verfahren zur Rückgewinnung von Gas ein einzelnes Gastrennmembranmodul (140) und 2N Gasspeichertanks verwendet werden,
wobei das Gastrennmembranmodul (140) N Anreicherungsprozesse durchführt und wobei ein Feedgas in jedem Anreicherungsprozess in ein permeierendes Gas und ein Rückgewinnungsgas getrennt wird,
wobei ein in einem n-ten Gasspeichertank gespeichertes Gas in jedem Anreicherungsprozess bis zu einem N-ten Anreicherungsprozess dem Gastrennmembranmodul (140) zugeführt wird und in ein n-tes permeierendes Gas und ein n-tes Rückgewinnungsgas getrennt wird, und wobei das n-te permeierende Gas in einem (n - 1)-ten Gasspeichertank gespeichert wird und das n-te Rückgewinnungsgas in einem (n + 1)-ten Gasspeichertank gespeichert wird, wobei n = 1 bis N; und wobei das erste permeierende Gas des ersten Anreicherungsprozesses nicht in einem Gasspeichertank gespeichert wird, sondern ausgestoßen wird,
wobei jeder Anreicherungsprozess mit einer ungeraden Ordnungszahl bis zu einem (2n - 1)-ten Anreicherungsprozess in Vorwärtsrichtung durchgeführt wird, und wobei jeder Anreicherungsprozess mit einer geraden Ordnungszahl bis zu einem 2n-ten Anreicherungsprozess in Rückwärtsrichtung durchgeführt wird, wenn n ≥ 2, und
wobei die Vorwärtsrichtung für einen Gasstrom von einem den Gasspeichertanks mit einer ungeraden Ordnungszahl zugewandten ersten Ende des Gastrennmembranmoduls (140) zu einem den Gasspeichertanks mit einer geraden Ordnungszahl zugewandten zweiten Ende des Gastrennmembranmoduls (140) steht, und wobei die Rückwärtsrichtung für eine der Vorwärtsrichtung entgegengesetzte Richtung steht.

10. Verfahren zur Rückgewinnung von Gas nach Anspruch 9,
wobei ein erstes permeierendes Gas eines ersten Anreicherungsprozesses ausgestoßen wird und wobei ein von einer Abgasversorgungseinheit (110) zugeführtes Abgas und ein permeierendes Gas in einem ersten Gasspeichertank gespeichert werden.

11. Verfahren zur Rückgewinnung von Gas nach Anspruch 9 oder 10,
wobei ein SC-Regler zum Regeln eines SC-Wertes des Gastrennmembranmoduls (140) beim Durchführen des N-ten Anreicherungsprozesses vorgesehen ist, und wobei der SC-Wert ($\theta_n$) des N-ten Anreicherungsprozesses in Abhängigkeit von der folgenden Gleichung festgelegt wird:

$$\text{(Gleichung)} \quad \theta_n \;=\; \frac{e_n - 1}{e_n - \frac{1}{(1 - x_n)\alpha + x_n}} \;,$$

wobei $\theta_n$ für einen SC-Wert in dem N-ten Anreicherungsprozess steht, $e_n$ für ein Zielanreicherungsverhältnis in dem N-ten Anreicherungsprozess steht, $x_n$ für eine Zielgaskonzentration des in dem N-ten Anreicherungsprozess in das Gastrennmembranmodul (140) eingespeisten Feedgases steht und $\alpha$ für eine Selektivität des Gastrennmembranmoduls (140) steht.

12. Verfahren zur Rückgewinnung von Gas nach einem der Ansprüche 9 bis 11, wobei ein Druck eines dem Gastrennmembranmodul (140) zugeführten Gases permanent in jedem Anreicherungsprozess reguliert wird.

13. Verfahren zur Rückgewinnung von Gas nach einem der Ansprüche 9 bis 12, wobei eine Zielgaskonzentration ($y_n$) des in dem N-ten Anreicherungsprozess getrennten n-ten permeierenden Gases mit der folgenden Gleichung berechnet wird:

$$\text{(Gleichung)} \quad y_n \;=\; \frac{x_n}{(1 - x_n)\alpha + x_n} \;,$$

wobei $y_n$ für eine in dem n-ten permeierenden Gas des N-ten Anreicherungsprozesses enthaltene Zielgaskonzentration steht, $x_n$ für eine Zielgaskonzentration in dem in dem N-ten Anreicherungsprozess in das Gastrennmembranmodul (140) eingespeisten Feedgas steht und $\alpha$ für eine Selektivität des Gastrennmembranmoduls (140) steht.

14. Verfahren zur Rückgewinnung von Gas nach einem der Ansprüche 9 bis 13, wobei eine Membranfläche des Gastrennmembranmoduls (140) in Abhängigkeit von der folgenden Gleichung festgelegt wird:

$$\text{(Gleichung)} \quad A \;=\; \frac{f_1 \theta_1}{P_0(P_A(1 - x_0) + P_B x_0)} \;,$$

wobei $A$ für eine Membranfläche des Gastrennmembranmoduls (140) steht, $f_1$ für eine Feedgas-Durchflussmenge eines ersten Anreicherungsprozesses steht, $\theta_1$ für einen ersten SC-Wert des ersten Anreicherungsprozesses steht, $P_0$ für einen Feeddruck des in das Gastrennmembranmodul (140) eingespeisten Feedgases steht, $P_A$ für eine Permeabilität des permeierenden Gases steht, $P_B$ für eine Permeabilität des Zielgases steht und $x_0$ für eine Zielgaskonzentration in einem Abgas steht.

15. Verfahren zur Rückgewinnung von Gas nach einem der Ansprüche 9 bis 14, wobei eine Arbeitszeit ($T_1$) eines ersten Anreicherungsprozesses die nachstehende Gleichung 1 erfüllt und eine Arbeitszeit ($T_n$) des N-ten Anreicherungsprozesses (n ist eine natürliche Zahl, die gleich oder größer als 2 ist) die nachstehende Gleichung 2 erfüllt:

$$\text{(Gleichung 1)} \quad T_1 \leq \frac{C_1(P_{1,max} - P_0)}{f_{F,1} - f_0} \;,$$

wobei $T_1$ für eine Arbeitszeit des ersten Anreicherungsprozesses steht, $C_1$ für eine Kapazität des ersten Gasspeichertanks steht, $P_{1,max}$ für einen maximalen Gasdruck in dem ersten Gasspeichertank steht, $P_0$ für einen Feeddruck des dem Gastrennmembranmodul (140) zugeführten Feedgases steht, $f_{F,1}$ für eine Durchflussmenge des Feedgases in dem ersten Anreicherungsprozess steht und $f_0$ für eine Durchflussmenge eines Abgases in dem ersten Anreicherungsprozesses steht,

$$\text{(Gleichung 2)} \qquad T_n \le \frac{C_n(P_{n,max} - P_0)}{f_{F,n}} \quad ,$$

wobei $T_n$ (n ist eine natürliche Zahl, die gleich oder größer als 2 ist) für eine Arbeitszeit des N-ten Anreicherungsprozesses steht, $C_n$ für eine Kapazität des ersten Gasspeichertanks steht, $P_{n,max}$ für einen maximalen Gasdruck des ersten Gasspeichertank steht, $P_0$ für einen Feeddruck des dem Gastrennmembranmodul (140) zugeführten Feedgases steht und $f_{F,n}$ für eine Durchflussmenge des Feedgases in dem N-ten Anreicherungsprozess steht.

## Revendications

1. Appareil pour la récupération de gaz, comprenant :

   un module (140) de membrane de séparation des gaz pour effectuer N processus d'enrichissement et pour séparer un gaz d'alimentation dans chaque processus d'enrichissement en un gaz pénétrant et un gaz de récupération ; et
   2N réservoirs de stockage de gaz,
   dans lequel, dans chaque processus d'enrichissement jusqu'à un N$^{ième}$ processus d'enrichissement, un gaz stocké dans un n$^{ième}$ réservoir de stockage de gaz est fourni au module (140) de membrane de séparation des gaz et est séparé en un n$^{ième}$ gaz pénétrant et un n$^{ième}$ gaz de récupération, et dans lequel le n$^{ième}$ gaz pénétrant est stocké dans un (n - 1)$^{ième}$ réservoir de stockage de gaz et le n$^{ième}$ gaz de récupération est stocké dans un (n + 1)$^{ième}$ réservoir de stockage de gaz, dans lequel n = 1 à N ; et
   dans lequel le premier gaz pénétrant du premier processus d'enrichissement n'est pas stocké dans un réservoir de stockage de gaz, mais est émis,
   dans lequel chaque processus d'enrichissement ayant un nombre ordinal impair jusqu'à un (2n - 1)$^{ième}$ processus d'enrichissement est effectué dans une direction avant et, si $n \ge 2$, chaque processus d'enrichissement ayant un nombre ordinal pair jusqu'à un 2n$^{ième}$ processus d'enrichissement est effectué dans une direction arrière, et dans lequel la direction avant représente un courant gazeux d'une première extrémité du module (140) de membrane de séparation des gaz faisant face vers les réservoirs de stockage de gaz ayant un nombre ordinal impair à une deuxième extrémité dudit module (140) de membrane de séparation des gaz faisant face vers les réservoirs de stockage de gaz ayant un nombre ordinal pair, et dans lequel la direction arrière représente une direction opposée à la direction avant.

2. Appareil pour la récupération de gaz selon la revendication 1, comprenant en outre :

   un premier régulateur (151) de taux de prélèvement (anglais : *stage-cut (SC) regulator*) pour contrôler une valeur SC du module (140) de membrane de séparation des gaz lorsque le (2n - 1)$^{ième}$ processus d'enrichissement est effectué ; et
   un deuxième régulateur (152) SC pour contrôler une valeur SC du module (140) de membrane de séparation des gaz lorsque le 2n$^{ième}$ processus d'enrichissement est effectué.

3. Appareil pour la récupération de gaz selon la revendication 1 ou 2,
   dans lequel une valeur ($\theta_n$) SC du N$^{ième}$ processus d'enrichissement est déterminée en fonction de l'équation suivante :

$$\text{(équation)} \qquad \theta_n = \frac{e_n - 1}{e_n - \frac{1}{(1-r_n)\alpha + r_n}} \quad ,$$

dans laquelle $\theta_n$ représente une valeur SC dans le N$^{ième}$ processus d'enrichissement, $e_n$ représente un rapport

d'enrichissement cible dans le $N^{ième}$ processus d'enrichissement, $x_n$ représente une concentration de gaz cible du gaz d'alimentation injecté dans le module (140) de membrane de séparation des gaz dans le $N^{ième}$ processus d'enrichissement et $\alpha$ représente une sélectivité du module (140) de membrane de séparation des gaz.

4. Appareil pour la récupération de gaz selon l'une quelconque des revendications 1 à 3, comprenant en outre un premier dispositif de contrôle (131) de la pression d'alimentation et un deuxième dispositif de contrôle (132) de la pression d'alimentation,

   dans lequel le premier dispositif de contrôle (131) de la pression d'alimentation contrôle une pression de gaz fournie au module (140) de membrane de séparation des gaz de manière à ce que la pression soit constante lorsque le $(2n - 1)^{ième}$ processus d'enrichissement est effectué,

   dans lequel le deuxième dispositif de contrôle (132) de la pression d'alimentation contrôle une pression de gaz fournie au module (140) de membrane de séparation des gaz de manière à ce que la pression soit constante lorsque le $2n^{ième}$ processus d'enrichissement est effectué, et

   dans lequel des pressions de gaz contrôlées par le premier dispositif de contrôle (131) de la pression d'alimentation et le deuxième dispositif de contrôle (132) de la pression d'alimentation sont amenées à la même pression ($P_0$).

5. Appareil pour la récupération de gaz selon l'une quelconque des revendications 1 à 4, comprenant en outre une unité (110) d'alimentation en gaz d'échappement pour fournir un gaz d'échappement contenant un gaz cible à un premier réservoir (121) de stockage de gaz,

   dans lequel le premier réservoir (121) de stockage de gaz stocke le gaz d'échappement fourni par l'unité (110) d'alimentation en gaz d'échappement et un deuxième gaz pénétrant, et dans lequel le premier gaz pénétrant du premier processus d'enrichissement est émis.

6. Appareil pour la récupération de gaz selon l'une quelconque des revendications 1 à 5,

   dans lequel une concentration ($y_n$) de gaz cible du $n^{ième}$ gaz pénétrant séparé dans le $N^{ième}$ processus d'enrichissement est calculée à l'aide de l'équation suivante :

$$(\text{équation}) \quad y_n = \frac{x_n}{(1 - x_n)\alpha + x_n},$$

   dans laquelle $y_n$ représente une concentration de gaz cible incluse dans le $n^{ième}$ gaz pénétrant du $N^{ième}$ processus d'enrichissement, $x_n$ représente une concentration de gaz cible dans le gaz d'alimentation injecté dans le module (140) de membrane de séparation des gaz dans le $N^{ième}$ processus d'enrichissement et $\alpha$ représente une sélectivité du module (140) de membrane de séparation des gaz.

7. Appareil pour la récupération de gaz selon l'une quelconque des revendications 1 à 6,

   dans lequel une surface membranaire du module (140) de membrane de séparation des gaz est déterminée en fonction de l'équation suivante :

$$(\text{équation}) \quad A = \frac{f_1\theta_1}{P_0(P_A(1 - x_0) + P_B x_0)},$$

   dans laquelle A représente une surface membranaire du module (140) de membrane de séparation des gaz, fi représente un débit du gaz d'alimentation du premier processus d'enrichissement, $\theta_1$ représente une première valeur SC du premier processus d'enrichissement, $P_0$ représente une pression d'alimentation du gaz d'alimentation injecté dans le module (140) de membrane de séparation des gaz, $P_A$ représente une perméabilité du gaz pénétrant, $P_B$ représente une perméabilité du gaz cible et $x_0$ représente une concentration de gaz cible dans un gaz d'échappement.

8. Appareil pour la récupération de gaz selon l'une quelconque des revendications 1 à 7,

   dans lequel une durée d'opération ($T_1$) d'un premier processus d'enrichissement satisfait à l'équation 1 ci-dessous et une durée d'opération ($T_n$) du $N^{ième}$ processus d'enrichissement (n est un entier naturel égal ou supérieur à 2) satisfait à l'équation 2 ci-dessous :

$$\text{(équation 1)} \quad T_1 \leq \frac{C_1(P_{1,max} - P_0)}{f_{F,1} - f_0},$$

dans laquelle $T_1$ représente une durée d'opération du premier processus d'enrichissement, $C_1$ représente une capacité du premier réservoir (121) de stockage de gaz, $P_{1,max}$ représente une pression de gaz maximale dans le premier réservoir (121) de stockage de gaz, $P_0$ représente une pression d'alimentation du gaz d'alimentation fourni au module (140) de membrane de séparation des gaz, $f_{F,1}$ représente un débit du gaz d'alimentation dans le premier processus d'enrichissement et $f_0$ représente un débit d'un gaz d'échappement dans le premier processus d'enrichissement,

$$\text{(équation 2)} \quad T_n \leq \frac{C_n(P_{n,max} - P_0)}{f_{F,n}},$$

dans laquelle $T_n$ (n est un entier naturel égal ou supérieur à 2) représente une durée d'opération du N$^{ième}$ processus d'enrichissement, $C_n$ représente une capacité du premier réservoir (121) de stockage de gaz, $P_{n,max}$ représente une pression de gaz maximale du premier réservoir (121) de stockage de gaz, $P_0$ représente une pression d'alimentation du gaz d'alimentation fourni au module (140) de membrane de séparation des gaz et $f_{F,n}$ représente un débit du gaz d'alimentation dans le N$^{ième}$ processus d'enrichissement.

9. Procédé pour la récupération de gaz,
dans lequel dans le procédé pour la récupération de gaz un seul module (140) de membrane de séparation des gaz et 2N réservoirs de stockage de gaz sont utilisés, dans lequel le module (140) de membrane de séparation des gaz effectue N processus d'enrichissement et dans lequel un gaz d'alimentation est séparé dans chaque processus d'enrichissement en un gaz pénétrant et un gaz de récupération ;
dans lequel, dans chaque processus d'enrichissement jusqu'à un N$^{ième}$ processus d'enrichissement, un gaz stocké dans un n$^{ième}$ réservoir de stockage de gaz est fourni au module (140) de membrane de séparation des gaz et est séparé en un n$^{ième}$ gaz pénétrant et un n$^{ième}$ gaz de récupération, et dans lequel le n$^{ième}$ gaz pénétrant est stocké dans un (n - 1)$^{ième}$ réservoir de stockage de gaz et le n$^{ième}$ gaz de récupération est stocké dans un (n + 1)$^{ième}$ réservoir de stockage de gaz, dans lequel n = 1 à N ; et dans lequel le premier gaz pénétrant du premier processus d'enrichissement n'est pas stocké dans un réservoir de stockage de gaz, mais est émis,
dans lequel chaque processus d'enrichissement ayant un nombre ordinal impair jusqu'à un (2n - 1)$^{ième}$ processus d'enrichissement est effectué dans une direction avant et, si $n \geq 2$, chaque processus d'enrichissement ayant un nombre ordinal pair jusqu'à un 2n$^{ième}$ processus d'enrichissement est effectué dans une direction arrière, et
dans lequel la direction avant représente un courant gazeux d'une première extrémité du module (140) de membrane de séparation des gaz faisant face vers les réservoirs de stockage de gaz ayant un nombre ordinal impair à une deuxième extrémité dudit module (140) de membrane de séparation des gaz faisant face vers les réservoirs de stockage de gaz ayant un nombre ordinal pair, et dans lequel la direction arrière représente une direction opposée à la direction avant.

10. Procédé pour la récupération de gaz selon la revendication 9,
dans lequel un premier gaz pénétrant d'un premier processus d'enrichissement est émis, et
dans lequel un gaz d'échappement fourni d'une unité (110) d'alimentation en gaz d'échappement et un deuxième gaz pénétrant sont stockées dans un premier réservoir de stockage de gaz.

11. Procédé pour la récupération de gaz selon la revendication 9 ou 10,
dans lequel est prévu un régulateur SC pour contrôler une valeur SC du module (140) de membrane de séparation des gaz lorsque le N$^{ième}$ processus d'enrichissement est effectué, et dans lequel une valeur ($\theta_n$) SC du N$^{ième}$ processus d'enrichissement est déterminée en fonction de l'équation suivante :

$$\text{(équation)} \quad \theta_n = \frac{e_n - 1}{e_n - \frac{1}{(1 - r_n)\alpha + r_n}},$$

dans laquelle $\theta_n$ représente une valeur SC dans le $N^{ième}$ processus d'enrichissement, $e_n$ représente un rapport d'enrichissement cible dans le $N^{ième}$ processus d'enrichissement, $x_n$ représente une concentration de gaz cible du gaz d'alimentation injecté dans le module (140) de membrane de séparation des gaz dans le $N^{ième}$ processus d'enrichissement et $\alpha$ représente une sélectivité du module (140) de membrane de séparation des gaz.

12. Procédé pour la récupération de gaz selon l'une quelconque des revendications 9 à 11,
dans lequel une pression d'un gaz fourni au module (140) de membrane de séparation des gaz est contrôlée en permanence dans chaque processus d'enrichissement.

13. Procédé pour la récupération de gaz selon l'une quelconque des revendications 9 à 12,
dans lequel une concentration ($y_n$) de gaz cible du $n^{ième}$ gaz pénétrant séparé dans le $N^{ième}$ processus d'enrichissement est calculée à l'aide de l'équation suivante :

$$ (\text{équation}) \quad y_n = \frac{x_n}{(1 - x_n)\alpha + x_n} , $$

dans laquelle $y_n$ représente une concentration de gaz cible incluse dans le $n^{ième}$ gaz pénétrant du $N^{ième}$ processus d'enrichissement, $x_n$ représente une concentration de gaz cible dans le gaz d'alimentation injecté dans le module (140) de membrane de séparation des gaz dans le $N^{ième}$ processus d'enrichissement et $\alpha$ représente une sélectivité du module (140) de membrane de séparation des gaz.

14. Procédé pour la récupération de gaz selon l'une quelconque des revendications 9 à 13,
dans lequel une surface membranaire du module (140) de membrane de séparation des gaz est déterminée en fonction de l'équation suivante :

$$ A = \frac{f_1 \theta_1}{P_0(P_A(1 - x_0) + P_B x_0)} $$

$$ (\text{équation}) \quad , $$

dans laquelle A représente une surface membranaire du module (140) de membrane de séparation des gaz, $f_1$ représente un débit du gaz d'alimentation du premier processus d'enrichissement, $\theta_1$ représente une première valeur SC du premier processus d'enrichissement, $P_0$ représente une pression d'alimentation du gaz d'alimentation injecté dans le module (140) de membrane de séparation des gaz, $P_A$ représente une perméabilité du gaz pénétrant, $P_B$ représente une perméabilité du gaz cible et $x_0$ représente une concentration de gaz cible dans un gaz d'échappement.

15. Procédé pour la récupération de gaz selon l'une quelconque des revendications 9 à 14,
dans lequel une durée d'opération ($T_1$) d'un premier processus d'enrichissement satisfait à l'équation 1 ci-dessous et une durée d'opération ($T_n$) du $N^{ième}$ processus d'enrichissement (n est un entier naturel égal ou supérieur à 2) satisfait à l'équation 2 ci-dessous :

$$ (\text{équation 1}) \quad T_1 \leq \frac{C_1(P_{1,max} - P_0)}{f_{F,1} - f_0} , $$

dans laquelle $T_1$ représente une durée d'opération du premier processus d'enrichissement, $C_1$ représente une capacité du premier réservoir de stockage de gaz, $P_{1,max}$ représente une pression de gaz maximale dans le premier réservoir de stockage de gaz, $P_0$ représente une pression d'alimentation du gaz d'alimentation fourni au module (140) de membrane de séparation des gaz, $f_{F,1}$ représente un débit du gaz d'alimentation dans le premier processus d'enrichissement et $f_0$ représente un débit d'un gaz d'échappement dans le premier processus d'enrichissement,

$$(\text{équation 2}) \qquad T_n \leq \frac{C_n(P_{n,max} - P_0)}{f_{F,n}} \quad,$$

dans laquelle $T_n$ (n est un entier naturel égal ou supérieur à 2) représente une durée d'opération du $N^{ième}$ processus d'enrichissement, $C_n$ représente une capacité du premier réservoir de stockage de gaz, $P_{n,max}$ représente une pression de gaz maximale du premier réservoir de stockage de gaz, $P_0$ représente une pression d'alimentation du gaz d'alimentation fourni au module (140) de membrane de séparation des gaz et $f_{F,n}$ représente un débit du gaz d'alimentation dans le $N^{ième}$ processus d'enrichissement.

[FIG. 1]

EP 2 957 333 B1

[FIG. 2a]

EP 2 957 333 B1

EP 2 957 333 B1

【FIG. 2b】

[FIG. 2c]

EP 2 957 333 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101249261
- US 20120260799 A
- KR 20120077322 A
- JP 2002331219 A